Europäisches Patentamt

European Patent Office

Office européen des brevets

(11) Publication number: 0 294 912
A2

# EUROPEAN PATENT APPLICATION

(21) Application number: 88301106.6

(22) Date of filing: 10.02.88

(51) Int. Cl.⁴: D01F 6/62 , C08G 63/20 , C08G 63/68

(30) Priority: 11.02.87 US 14246

(43) Date of publication of application:
14.12.88 Bulletin 88/50

(84) Designated Contracting States:
AT CH DE ES FR GB IT LI SE

(71) Applicant: E.I. DU PONT DE NEMOURS AND
COMPANY
Legal Department 1007 Market Street
Wilmington Delaware 19898(US)

(72) Inventor: Broaddus, Clarke Rust
1906 East Fourth Street
Greenville North Carolina 27834(US)
Inventor: Gollhardt, Bradley Jay
14 West Jonathan Court
Kennett Square Pennsylvania 19348(US)

(74) Representative: Jones, Alan John et al
CARPMAELS & RANSFORD 43 Bloomsbury
Square
London, WC1A 2RA(GB)

(54) Polyester fiberfill and process.

(57) Polyester fiberfill that is new and improved in that the polyester polymer is chain-branched with a small amount of chain-brancher, such as trimellitic acid, trimesic acid, or a derivative thereof, or tetraethyl silicate, and a process for preparing such chain-branched polyester fiberfill.

## POLYESTER FIBERFILL AND PROCESS

### TECHNICAL FIELD

This invention concerns improvements in and relating to polyester fiberfilling material, commonly referred to as polyester fiberfill, and more particularly to polyester fiberfill that is new and improved on account of the polyester being chain-branched, and to a process for preparing such polyester fiberfill.

### BACKGROUND OF THE INVENTION

Polyester fiberfill has become well accepted as a reasonably inexpensive filling and/or insulating material for pillows, cushions and other furnishing materials, including bedding materials, and in apparel, and is manufactured and used in large quantities commercially. For several of these uses, it is preferred to use hollow fiberfill, as disclosed, e.g., by Tolliver in U.S. Patent No. 3,772,137, and in EPA2 0067 684 (Jones and Kohli), rather than solid fiberfill, because of the lower density, and the higher bulk and improved thermal insulation properties.

It has always been desirable to maximize and improve the bulk of polyester fiberfill, provided this improvement could be achieved without undue expense. There have been several prior suggestions, including even the use of bicomponent fibers that crimp spontaneously on account of the differential shrinkage between the components. However, the preparation of bicomponent filaments is more expensive, in requiring apparatus that is more expensive than is required for homogeneous (i.e. monocomponent) materials, quite apart from any expense involved in providing the two separate component materials, and so it would be desirable to provide polyester fiberfill of improved bulk from homogeneous material. Furthermore, in order to provide homogeneous (i.e. monocomponent) polyester fiberfill having high bulk, hitherto, it has been necessary or desirable to monitor the process very carefully and to exercise strict control over the process conditions, which has increased the cost of providing such desirable material of high bulk.

It is an object of the invention to overcome the aforesaid difficulties and to provide polyester fiberfill of improved bulk, preferably without the need for expensive materials or apparatus, such as for bicomponent fibers, and without the need for such stringent process control. Cost has always been an important consideration for polyester fiberfill.

Polyester fiberfill is manufactured by a process involving steps essentially similar to those used also for preparing polyester staple fiber for other purposes, such as spun yarn for use in woven or knitted fabrics, the various steps having been modified and optimized to provide such properties as are desirable for fiberfill, rather than in spun yarns. Thus, the conventional process involves the steps of preparing the polyester polymer, melt-spinning the polyester polymer into filaments, processing the filaments in the form of a tow, usually by drawing, crimping and relaxing, and then converting the crimped continuous filaments into staple fiber of the cut length that is desired. It is often desirable to "slicken" to improve the aesthetics of polyester fiberfill. Hitherto, the polyester polymer that has generally been preferred for polyester fiberfill has been poly(ethylene terephthalate) because of the desirability of minimizing expense. This polymer is referred to hereinafter generally as homopolymer or standard or linear polymer.

### SUMMARY OF THE INVENTION

According to the invention, there is provided polyester fiberfill that is improved in that the polymer contains a small amount of a chain-brancher, so that the polyester polymer is chain-branched instead of being wholly linear, as has been used for commercial manufacture hitherto, and a process for preparing such chain-branched polyester fiberfill.

According to one aspect of the invention, therefore, there is provided polyester fiberfill wherein the polyester polymer consists essentially of polymerized ethylene terephthalate residues chain-branched with about 2 to about 10 MEQ, preferably about 4 to about 8 MEQ, of trimesate, trimellitate or oxysilicate residues. By MEQ herein we mean microequivalents of reactive branching sites per gram of polymer. Such chain-branched polyester polymer has been found particularly useful in polyester fiberfill whose filaments are of hollow cross-section, e.g. as described in Tolliver, U.S. Patent No. 3,772,137, and especially with multiple voids along the filaments' lengths, e.g. 4 voids per filament, such as described in EPA2 0067 684.

According to another aspect of the invention, there is provided a process for preparing polyester fiberfill involving the steps of preparing poly(ethylene terephthalate), melt-spinning the poly(ethylene terephthalate) into filaments, processing the filaments in the form of a tow by drawing, crimping and relaxing, and converting the crimped filaments into staple fiber, wherein the process is modified by introducing into the polymer a chain-brancher, such as trimellitic acid, trimesic acid or an ester thereof, especially the glycollate, or tetraethyl silicate.

Preferred chain-branchers are conveniently introduced as a solution in ethylene glycol, and may be introduced into a reaction between ethylene glycol and terephthalic acid or dimethyl terephthalate, being the first stage of the reaction to form the polyester polymer. The chain-brancher is preferably introduced before low molecular weight material, sometimes referred to as prepolymer, or oligomer, is polymerized, and especially between the first stage of polymer formation in which such material is formed and the second stage in which such material is polymerized, especially using the glycollate of trimellitic acid.

## BRIEF DESCRIPTION OF DRAWINGS

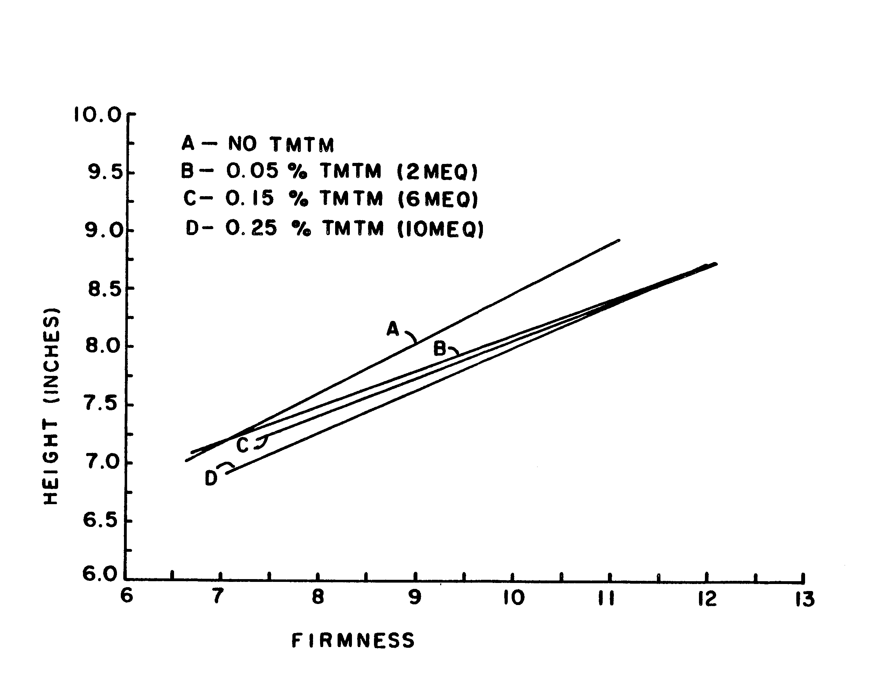

The Figure in the accompanying drawings is a graph plotting the height against the firmness of various pillows that are subjected to an accelerated use test, referred to as "stomping", and is referred to hereinafter.

## DETAILED DESCRIPTION OF THE INVENTION

As indicated, apart from the modification of the polyester polymer, by the introduction of a chain-brancher in appropriate amount, a conventional process for preparing polyester fiberfill may be performed. The chain-branching of the polyester polymer provides important and unexpected advantages in the eventual polyester fiberfill, as will be described hereinafter. Preferred chain-branchers are trimellitic acid, trimesic acid and esters thereof. The use of such chain-branchers is also proposed in copending application EP-A-87308038.6 and the resulting polyester polymers are used for making draw-texturing feed yarns, which is an entirely different purpose. However, reference may be made to the disclosures in this copending application for discussion of the chain-branchers and their incorporation into polyester polymers. Similarly, reference may be made to copending application EP-A-87308037.8 for disclosure of another preferred chain-brancher, namely tetraethyl silicate (TES), included for a similar purpose.

The introduction of the chain-brancher in small amounts in the process of preparation of the polyester, modifies the resulting polyester, which is accordingly a copolymer. It is believed that such chain-branching has not previously been used commercially for polyester fiberfill. This particular use may not even have been suggested previously because it has generally been considered desirable to use the least expensive ingredients and processing for polyester fiberfill. However, as will be seen hereinafter, the polyester fiberfill of the invention provides important and unexpected advantages on account of the chain-branching of the polymer and the provision of chain-brancher in the process of its preparation.

It is not new to suggest the use of chain-branchers in polyester polymers for other purposes. Thus, the use of TES in polyester polymers has already been suggested for different purposes, especially the production of low viscosity polyester staple fibers to improve the pill resistance of fabrics, e.g., in Mead and Reese U.S. Patent No. 3,335,211. For this different purpose, the TES was incorporated during the formation of the polyester in similar manner. The importance of maintaining the polyester anhydrous prior to spinning was emphasized (bottom of column 3), preferably by avoiding a remelt operation. When the polyester fibers are exposed to moisture, hydrolysis takes place, thus sharply reducing the viscosity of the polyester fibers, which was of advantage.

Tetraethyl silicate, or more properly tetraethyl orthosilicate, is readily available commercially, and is consequently a preferred oxysilicate chain-brancher in accordance with this invention, but it will be recognized that other hydrocarbyl oxysilicon compounds can be used, as disclosed in U.S. Patent No. 3,335,211, the disclosure of which is hereby incorporated by reference.

MacLean et al., U.S. Patent No. 4,092,299 suggests improving productivity in a high draw ratio polyester feed yarn and its draw-texturing. Companion U.S. Patent No. 4,113,704 suggests a polyester filament-forming polymer and its method of production. Since the two disclosures are practically identical, only U.S. Patent No. 4,092,299 will be discussed. MacLean also lists several prior art patents that suggest incorporating chain-branchers for other purposes. MacLean does not teach making fiberfill with his polymers.

3

MacLean et al., U.S. Patent No. 4,092,299 suggests using a chain-brancher in such amount that the polyester has 1-15 or 2-14 microequivalents of reactive branching sites per gram of polymer (MEQ), and preferably 5-12 MEQ. He increased productivity by increasing the draw ratio during draw-texturing and/or increasing the withdrawal speed during filament formation, because the orientation (birefringence) of the feed yarn is reduced by using chain-brancher. Pentaerythritol is suggested as the preferred chain-brancher, but it is not desirable according to the present invention, because it volatizes during polymer preparation. Use of such volatile chain-branchers would lead to processing problems and lack of uniformity in the resulting polyester fiberfill. According to the present invention, it is desirable to use a chain-brancher that is adequately stable (both in monomer form during processing and polymerization and in polymeric form during formation of the polymer and spinning into filaments and subsequent processing), not so volatile as to cause problems and variability during preparation of the polymer, and that is soluble in the catalyzed glycol for ease of addition to the reaction. Trimellitic acid and its ester derivatives fulfill these functions, as described hereinafter in the Examples. It is believed that trimesic acid and its ester derivatives would have similar functions and advantages, and also TES, provided hydrolysis is avoided during polymer and filament formation, as mentioned above. There are two main routes to preparing most polyethylene terephthalate polyesters, namely ester interchange of dimethyl terephthalate (DMT) with ethylene glycol (EG) to form a low molecular material, sometimes referred to as prepolymer, followed by further polymerization, or reaction of terephthalic acid (TPA) with EG to form the prepolymer, followed by further polymerization. If the DMT route is used, then an ester, such as trimethyl trimellitate (TMTM), will generally be preferred, whereas trimellitic acids (TMA) will be preferred generally for the TPA route. For polyester fiberfill, a third route and the glycollate (ExTMTM) may be preferred, as will be explained hereinafter.

MacLean is not limited to the use of pentaerythritol, but covers other chain-branching agents having a funtionality greater than 2, that is containing more than 2 functional groups such as hydroxyl, carboxyl or ester. Accordingly, other polyhydroxy chain-branchers are mentioned, and aromatic polyfunctional acids or their esters (column 7). Trimesic acid, trimethyl trimesate and tetramethyl pyromellitate are specifically mentioned in lines 41-42, but are not used in the Examples. In Table IV, column 12, trimer acid is used in amounts 11,800 and 23,600 ppm (said to be 6.5 and 12.9 MEQ, but calculated instead as 12.9 and 25.1 MEQ, respectively) and mellitic acid (benzene hexacarboxylic acid) is used in amounts 9.8 and 14.7 MEQ.

As will be seen in Example 1, hereinafter, wherein the DMT ester interchange route is used to prepare the polyester, the chain-brancher is conveniently dissolved in the catalyzed EG solution that is used in an otherwise conventional ester interchange reaction between DMT and EG using appropriate catalysts to prepare the prepolymer. Further polymerization (sometimes referred to as finishing) is carried out under vacuum with an appropriate material such as phosphorus again in conventional manner to prepare a polymer of the required viscosity (measured as LRV). The resulting polymer is then preferably passed continuously to the spinning unit without intermediate conversion into flake and remelting, and is melt-spun conventionally to prepare filaments which are collected into tows for further processing.

TMTM has three reactive carboxyl groups of which two are reacted in the molecular chain. The other one reacts to form a side chain which is referred to as a chain-branch. If and when these chain-branches react with another molecule, a crosslink is formed. Obviously there are many more chain-branches than crosslinks formed. Also, because there are only three of these (carboxyl) reactive sites in TMTM, there is only one for chain-branching. Therefore, the equivalent weight and the molecular weight are the same. 0.05% by weight of TMTM (on the weight of the polymer) is the same as 500 ppm and is almost 2 MEQ. Similarly, 0.10% of TMTM (1,000 ppm) is almost 4 MEQ. Trimesic acid has the same molecular weight as trimellitic acid, so the same values apply. TES has four reactive groups of which two are reacted in the molecular chain, so there are two available for chain-branching. Therefore, the equivalent weight is half the molecular weight. Four (4) MEQ are approximately 0.043% by weight of TES (430 ppm).

At least about 2 MEQ of chain-brancher are preferred in order to obtain significant product improvement. As indicated in Example 3 hereinafter, some of the product advantages obtained seem to increase with the amount of chain-brancher. However, most of these product advantages are obtained by using about 4 MEQ, and further increases in such amounts increase expense, which is an important consideration for polyester fiberfill. Also, processing problems have been noted at larger amounts, such as about 10 MEQ, which may prove a practically desirable upper limit. Although for particular end-uses, the product advantages of larger amounts may justify persevering with such problems, amounts of about 4 to about 8 MEQ of chain-brancher are expected to prove most beneficial in practice.

As indicated already, the incorporation of a small amount of chain-brancher in the polyester polymer provides advantages in the resulting polyester fiberfill. Some of these advantages, as discussed in the Examples, hereinafter, are unexpected. The bulk of polyester fiberfill is important in several end uses, and it has been found that the bulk of chain-branched polyester fiberfill, according to the invention, is improved as

4

compared with comparable polyester fiberfill prepared from standard homopolymer, sometimes referred to as linear polymer, prepared without such chain-brancher. One important attribute of commercial polyester fiberfill is referred to as "loft", i.e. the appearance of the fiberfill in an article, such as a pillow, restrained only by the surrounding fabric, and without any other weight applied. Another important attribute is the support bulk, which is conveniently measured as the bulk under a load of 0.2 psi (0.014 Kg per square cm) and indicated in Table I, hereinafter, as the BL2 measurement in the TBRM (Total Bulk Range Measurement) test, which is generally described in Tolliver U.S. Patent No. 3,772,137. Loft is often measured under a load of only 0.001 psi (0.00007 Kg per square cm). Another important attribute is the bulk durability, or retention after extended use. There is no standard test, but this can be measured after carrying out a pillow stomping procedure, again being generally described by Tolliver.

Another advantage resulting from the use of chain-branchers is the increased throughput or productivity in the polymerization process, as described in the Examples hereinafter. This can be of considerable commercial advantage, and can provide accompanying practical advantages, such as enabling one to use less catalyst or polymerization accelerator, which can reduce expense and also avoid affecting the color of the resulting polymer (in case this could be of importance and in case the preferred catalyst tends to have such undesired effect). The use of chain-brancher has been noted to provide significantly higher spinning tensions, than with unmodified polymer, which provides advantages downstream. Use of the chain-brancher is believed to have improved spinning performance, e.g. in the sense of reducing the frequency of spinning breaks, especially when spinning filaments of heavier denier or of unusual (non-round) cross-section. As indicated, previously, using standard homopolymer, it has been necessary to exercise stringent process controls in order to ensure that quality standards have been met. Use of chain-branched polyester has provided an unexpected advantage in that processing has been easier, especially in the processing of tows through the drawing operation, in the sense that it seems possible to obtain the desired quality standards without the need for the same stringent processing controls. It is also believed that the chain-branched polyester has improved the drawing operation in the sense that it has reduced the number of harsh fibers. A particularly surprising and important advantage has been noted in relation to the retention of crimp, and it is believed that the use of chain-brancher is associated also with this unexpected advantage. It is conventional to subject the tow of continuous filaments to crimping, followed by heat-setting in what is often referred to as a relaxing step, which latter has been necessary but has generally reduced the effective crimp or bulk. Unexpectedly, when using chain-branched polyester, a higher degree of crimp (or bulk) appears to be retained after the relaxing step. Taken individually, some of these improvements may seem minor, but they add up to significant advantages that can more than compensate for the increased cost of using chain-brancher in the polymer, which is considerably less than the cost of making polyester fiberfill from bicomponent material.

The invention is further described in the following Examples.

EXAMPLE 1

1 - Hompolymer Comparison

Polyethylene terephthalate containing 0.4% $TiO_2$ (by weight) is prepared from dimethyl terephthalate (DMT) and ethylene glycol (EG) using commercial exchange and polymerization conditions. DMT and EG are added to a reaction vessel to which is also added manganese (Mn) and antimony (Sb) catalyst. The exchange reaction gives a low molecular weight material comprising primarily monomer and some oligomer. At the completion of the exchange reaction, the Mn is neutralized by the addition of an appropriate amount of phosphoric acid. Polymerization of the low molecular weight material is effected until polymer of desired molecular weight (LRV 20.5) is obtained. The polymer is then transported to a spinning machine and spun at 290°C, with radial quench and at a speed of 1195 ypm into bundles of hollow filaments of the desired dpf. The filaments are combined into a large tow for drawing (at a temperature of 95°C and 3.23× draw ratio), crimping, and relaxing (at a temperature of 170°C for 15 minutes), and eventually cutting into staple fiber and packaging. The final staple is of 6 dpf, with a void content of 10% (by volume), and 8 crimps/inch. The bulk and bulk retention are measured and their values are taken as standard (100%) for the purpose of comparison with products according to the invention.

The process of Run 1 is repeated for the following products of the invention.

## 2A - TMTM

In addition to DMT and EG, about 2 MEQ of trimethyl trimellitate (TMTM) is added with the EG to the exchange reaction vessel. This amount of TMTM is completely soluble in the catalyzed EG and neither enhances nor inhibits the catalytic activity of the manganese or the antimony, but it is found that the rate of polymerization is increased significantly (about 20%) without deleteriously affecting properties such as color or carboxyl end groups. In this instance, the increased rate of polymerization was used to reduce the duration of the polymerization, thereby providing greater throughput in the polymerizer. If desired, however, a higher relative viscosity, improved finishability (i.e. less stringent polymerization conditions) or a combination of these advantages may be obtained. It is found that for a specific relative viscosity (LRV) the melt viscosity with TMTM is significantly higher. Also, the new filaments spin better than the homopolymer, with higher spinning tensions, which improve the threadline stability and provide better denier uniformity along the filaments, over a period of time, and comparing threadline-to-threadline. Importantly, for the hollow fibers, the void content was greater (21%) and provided fibers showing 4% higher bulk, (104% as compared with item 1). The new filaments required a higher draw tension, which required less stringent thermal and environmental conditions prior to drawing. The spinning and drawing conditions and properties were similar to those for item 1, except that the spinning speed was 1352 ypm, and the draw ratio was 3.13x. Surprisingly, there was improvement in bulk retention (112%) over the comparison with the homopolymer of Run 1 that was even more significant than the improvement in original bulk (104%).

## 2B - ExTMTM

The procedure of Run 2A was repeated, except that the TMTM was replaced by 2 MEQ of the trihydroxyethyl ester of trimellitic acid (ExTMTM). It was found that the ExTMTM was equivalent or perhaps provided slightly better results than TMTM.

As indicated above, for Runs 2A and 2B, the chain-brancher was added as a solution in the EG added to the exchange reaction vessel. For the following runs, the chain-brancher is injected between this first vessel, the exchange reaction vessel, and the second reaction vessel.

## 3A - TMTM

The procedure of Run 2A was repeated, except that as the low molecular weight material was transported from the exchange reaction vessel to the polymerization vessel, the TMTM was injected (as a solution in EG) into the transport line between the vessels, instead of being added with the EG to the exchange reaction vessel. The resulting polymer was substantially equivalent to the polymer of Run 2A, and the processing (spinning, drawing, cutting and packaging) were satisfactory and equivalent to Run 2A.

## 3B - ExTMTM

Run 3A was repeated, with ExTMTM instead of TMTM. The resulting polymer, spun and drawn yarn, and staple were essentially equivalent to those of Run 3A, but the ExTMTM was preferred over TMTM, for several reasons. The by-product from the glycollate, ExTMTM, is EG, whereas methanol is the by-product from TMTM. This presented no problems in Run 2A, because methanol is also a by-product from the exchange reaction, but the by-product from the polymerization is EG. Furthermore, ExTMTM has a higher boiling point and lower vapor pressure than TMTM, and so does not tend to escape with the by-product EG, so the final polymer (and products therefrom) seem to have improved uniformity when ExTMTM is used. ExTMTM is also easier to handle, being pourable at room temperature, and dissolving more readily in EG than does TMTM.

## EXAMPLE 2

Polyethylene terephthalate polymer is added to a reactor vessel along with excess ethylene glycol (EG) to reduce the degree of polymerization (DP) and provide a relatively uniform mass of low molecular weight material. This low molecular weight material is pumped through a pipe (hereinafter called an OL, oligomer line) to a second reaction vessel. During transfer through the OL, TMTM is injected into the mass to give a concentration in the final polymer of about 4 MEQ. In the second reaction vessel, the TMTM reacts to form chain-branched polymer, excess EG is removed, and the DP of the mass is increased to about 6 to 8 units. The polymer is pumped to a third vessel, referred to as a finisher, where the viscosity (LRV) is increased to the desired value by proper control of agitation of the mass temperature and pressure.

As a comparison, again, standard linear homopolymer is made by essentially the same process, except that no TMTM is injected.

The new polymer containing the TMTM reached the desired LRV in a shorter time than the standard homopolymer, so that less stringent conditions of agitation, temperature and/or vacuum may be used, and/or throughput may be increased by as much as 25%. The new polymer had better or equivalent color, because the possibility of reducing the polymerization time and/or conditions directly or indirectly leads to possibilities of improving color.

The new polymer and the comparison are pumped in identical standard systems and under equivalent standard conditions from the finishers directly to spinning machines (without extruding, quenching, cutting to flake, blending, drying and remelting) and are spun and collected under identical standard conditions. Spinning processibility is found to be somewhat better than for the standard filaments, with tensions in the threadline being somewhat higher so that handling is somewhat easier. This may be especially important for filaments of high dpf at low spinning speeds of the order of 700 ypm (640 mpm). The filaments are combined for subsequent processing into a tow.

The filaments are subjected to conventional drawing at such draw ratio as to give the standard elongation of about 45 to 55%, crimped in a stuffer box crimper, and relaxed. Filaments from the new tow and from the standard tow both have about the same crimp as they emerge from the crimper and enter the relaxer, but, surprisingly, after relaxing under essentially the same conditions, the new tow has in the relaxed form higher crimp frequency than the standard. For end uses requiring maximum bulk, this offers a new product and/or processing advantage. For end uses where the level of bulk available with the standard product is completely acceptable, the new tow and staple therefrom may be processed under less stringent conditions. The crimped and relaxed tow may be then cut into staple with properties and operability at least equivalent to the standard product.

An important improvement for the new tow and staple is the higher absolute level of firmness retention and height retention as demonstrated in standard internal laboratory testing to simulate accelerated end use performance. Two major end uses are sleeping pillows and furniture pillows, where firmness and height retention are extremely important. The new product has both a higher level of firmness and height as initially made, and after usage, as compared to standard product.

This Example was repeated twice, first with 8 MEQ of TMTM injected into the OL, as in Run 3A (of Example 1), and then with 8 MEQ of TMTM added into the exchange reaction vessel, as in Run 2A (of Example 1), but otherwise as in this Example. The resulting fibers are made up into pillows, which compared favorably (with a pillow of standard homopolymer fiber made according to the comparison, as described in this Example) in bulk and bulk retention when subjected to pillow stomping. This procedure is repeated with 8 MEQ of another chain-brancher, namely the terephthalate ester (TMPT) of trimethylol propane (TMP), which is added to the OL line. The terephthalate ester (TMPT) is used to avoid problems that would arise owing to the volatility of TMP. In polymer preparation, spinning, drawing, crimping, relaxing and cutting, this new product is more or less equivalent to those made with TMTM, process acceptably, show an advantage over the standard homopolymer, including when evaluated in the pillow stomping test, but the use of TMTM is preferred.

## EXAMPLE 3

Table I shows the effect of changing the TMTM content, otherwise following essentially the procedure of Example 2. The rate of polymerization is increased to an extent dependent on the amount of TMTM. However, the amount of such increase is not linear with TMTM content, but is greater at lower TMTM contents. As shown in Table I, the spinning throughput was increased for each item of the invention to 100 pph (pounds per hour), versus 90 pph for the homopolymer. Each new fiber has advantages over the standard, as can be seen from Table I, showing the increased throughput, void content and bulk retention.

7

## TABLE I

| Item | TMTM Content % by Wt. | MEQ | Spinning Throughput pph | Void % (Vol.) | Support Bulk TBRM BL2 |
|---|---|---|---|---|---|
| A | 0 | 0 | 90 | 10.0 | .58 |
| B | 0.05 | 2 | 100 | 21.2 | .72 |
| C | 0.15 | 6 | 100 | 16.5 | .72 |
| D | 0.25 | 10 | 100 | 15.3 | .77 |

It was also found that, in processing, there were fewer "splinters" (fiber defects) in the drawn and crimped tow, which is an important advantage, because tows and staples free of harsh filaments are much easier to process, e.g. through carding and garneting.

Each such item was processed into a pillow, and compared for height and firmness during a stomping test, the results of which are given graphically in the Figure. What is desirable is maximum firmness at the same height. Clearly, there are pronounced advantages for each of the items B, C and D in contrast with standard homopolymer A.

If desired, a slickener may be applied and the slickener is desirably cured, e.g. a silicone slickener, as disclosed, e.g., by Huffman in U.S. Patent No. 3,271,189 and by Mead et al. in U.S. Patent No. 3,454,422, or a hydrophilic coating, e.g. of the poly(alkylene oxide)-type, as described in copending EP-A-87309241.5.

The denier and cut length may be conventional. The chain-branched polymer appears to be particularly advantageous in lower denier fiberfill, of dpf 6 or less.

## Claims

1. Polyester fiberfill wherein the polyester polymer consists essentially of polymerized ethylene terephthalate residues chain-branched with about 2 to about 10 MEQ of trimesate, trimellitate or oxysilicate residues.

2. Polyester fiberfill wherein the polyester polymer consists essentially of polymerized ethylene terephthalate residues chain-branched with trimellitate residues in amount about 4 to about 8 MEQ.

3. Polyester fiberfill according to Claim 1 or 2, wherein the filaments are hollow in cross-section.

4. Polyester fiberfill according to Claim 3, wherein the filaments are hollow in cross-section with 4 continuous voids along their lengths.

5. A process for preparing polyester fiberfill involving the steps of preparing poly(ethylene terephthalate), melt-spinning the poly(ethylene terephthalate) into filaments, processing the filaments in the form of a tow by drawing, crimping and relaxing and converting the crimped filaments into staple fiber, wherein the process is modified by introducing into the polymer a chain-brancher, such as trimellitic acid, trimesic acid or an ester thereof or tetraethyl silicate.

6. Process according to Claim 5, wherein the chain-brancher is introduced as a solution in ethylene glycol.

7. Process according to Claim 6, wherein the chain-brancher is introduced into the first stage of the reaction, being a reaction between ethylene glycol and terephthalic acid or dimethyl terephthalate.

8. Process according to Claim 5 or 6, wherein the chain-brancher is introduced before low molecular weight material is polymerized.

9. Process according to Claim 8, wherein the chain-brancher is introduced between the first stage of polymer formation, in which low molecular weight material is formed, and the second stage, in which low molecular weight material is polymerized.

10. Process according to Claim 8 or 9, in which chain-brancher is introduced as the glycollate of trimellitic acid.